Europäisches Patentamt

European Patent Office

Office européen des brevets

(19)

(11) Veröffentlichungsnummer: **0 010 700**
**B1**

# EUROPÄISCHE PATENTSCHRIFT

(45) Veröffentlichungstag der Patentschrift:
**01.12.82**

(21) Anmeldenummer: **79104042.1**

(22) Anmeldetag: **19.10.79**

(51) Int. Cl.³: **A 01 K 5/02**, B 65 G 65/48

(54) **Tierfütterungsvorrichtung.**

(30) Priorität: **24.10.78 DE 2846313**

(43) Veröffentlichungstag der Anmeldung:
**14.05.80 Patentblatt 80/10**

(45) Bekanntmachung des Hinweises auf die Patenterteilung:
**01.12.82 Patentblatt 82/48**

(84) Benannte Vertragsstaaten:
**FR GB**

(56) Entgegenhaltungen:
**DE-A-2 354 802**
**DE-B-1 185 116**
**DE-U-1 852 270**
**DE-U-1 886 080**
**FR-A-2 373 227**
**GB-A-1 322 466**

(73) Patentinhaber: **Memminger GmbH, Wittlensweiler Strasse 12, D-7290 Freudenstadt (DE)**

(72) Erfinder: **Kühn, Falk, Zimmerplatz 7, D-7407 Kiebingen (DE)**
Erfinder: **Memminger, Gustav, Heideweg 65, D-7290 Freudenstadt (DE)**

(74) Vertreter: **Patentanwälte Dipl.-Ing. W. Scherrmann Dr.-Ing. R. Rüger et al, Webergasse 3, D-7300 Esslingen (DE)**

## Tierfütterungsvorrichtung

Die Erfindung betrifft eine Tierfütterungsvorrichtung zur Ausgabe von schüttbarem Futter, insbesondere für Pferde, mit einem das Futter aufnehmenden Vorratsbehälter, an dessen Auslauföffnung sich eine vorbestimmte Futterportion abteilende Dosiervorrichtung anschliesst, die eine unterhalb der Auslauföffnung des Vorratsbehälters angeordnete, um eine horizontale Achse drehbar gelagerte, geschlossene Dosiertrommel aufweist, welche mit wenigstens zwei am Umfang der Dosiertrommel gegeneinander versetzt angeordneten, jeweils zu einer Dosierkammer führenden Füll- und Entleerungsöffnungen versehen ist, von denen in einer ersten Trommelstellung die wenigstens eine und in einer zweiten Trommelstellung die wenigsten eine andere jeweils auf die Auslauföffnung ausgerichtet und abgedichtet an diese angeschlossen ist, während die jeweils nicht an die Auslauföffnung angeschlossene Füll- und Entleerungsöffnung nach unten zu gerichtet mit einem zu Futterstellen führenden Auslaufteil verbunden ist und wobei die Dosiertrommel mit einer ihr zur Durchführung der Füll- und Entleerungszyklen eine Drehbewegung erteilenden, wahlweise ansteuerbaren Antriebsvorrichtung gekuppelt ist.

Eine solche Tierfütterungsvorrichtung, die zur Fütterung von Vögeln, Fischen, Hühnern usw. bestimmt ist, ist aus der DE-A-2 354 802 bekannt. Die Dosiertrommel weist hierbei vier als Dosiernuten ausgebildete Dosierkammern auf, deren Füll- und Entleerungsöffnungen am Umfang der Dosiertrommel gegeneinander versetzt angeordnet sind. Der Antrieb der Dosiertrommel ist durch einen Zeitschalter gesteuert; er erfolgt intermittierend rechtsdrehend. Die Dosierkammern werden dabei aufeinanderfolgend in einen Auslauftrichter entleert, der entweder zu einer Futterstelle führt oder gleichzeitig die Versorgung von zwei Futterstellen bewirkt. Zu dem letztgenannten Zwecke kann dem Auslauftrichter ein Verteilerkegel nachgeordnet sein, der die jeweils auslaufende Futtermenge in zwei Portionen unterteilt, von denen die eine der einen Futterstelle und die andere der anderen Futterstelle zugeleitet wird. Die Abteilung der Portionen durch einen Verteilerkegel ist verhältnismässig gross und ungenau. Sie hängt auch von den Schütteigenschaften und damit der Beschaffenheit des Futters ab. Da die Dosierkammern als in die Dosiertrommel eingearbeitete, im Querschnitt schwalbenschwanzförmige Dosiernuten ausgebildet sind, kann die zugeteilte Futtermenge jeweils nur durch Austausch der ganzen Dosiertrommel gegen eine Dosiertrommel mit anderen Dosiernuten verändert werden.

Bei anderen Fütterungsvorrichtungen für Tiere, wie sie aus der DE-U-1 886 080 und der DE-U-1 852 270 bekannt sind, ist die dem Vorratsbehälter nachgeordnete, um eine horizontale Achse drehbare Dosiertrommel in einem sie allseitig umschliessenden Gehäuse angeordnet, das an den Vorratsbehälter angeschlossen ist. Die Dosiertrommeln dieser Vorrichtungen weisen aber jeweils nur eine einzige Dosierkammer auf, deren Volumen durch Einsatzstücke oder Schieber betriebsmässig verändert werden kann. Dabei ist bei der aus der DE-U-1 852 270 bekannten Fütterungsvorrichtung die Anordnung derart getroffen, dass eine Kante an einer Dichtleiste im Bereiche der Auslauföffnung des Vorratsbehälters mit einer Trennkante an der Dosierkammer der Dosiertrommel zusammenwirkt. Diese Fütterungsvorrichtungen können grundsätzlich nur ein einziges Auslaufrohr bedienen; sie gestatten es nicht, beispielsweise zwei getrennte Auslaufrohre abwechselnd mit genau dosierten Futtermengen zu versorgen.

Dies gilt auch für eine aus der GB-A-1 322 466 bekannte Vorrichtung zur Ausgabe von rieselfähigem, essbarem Gut, bei der dem Vorratsbehälter eine, jedoch keine Dosierkammern aufweisende, um eine horizontale Achse drehbar gelagerte Trommel nachgeschaltet ist, deren Oberfläche durch Dichtbürstenleisten einseitig gegen die Auslauföffnung des Vorratsbehälters abgedichtet ist.

Schliesslich ist noch aus der FR-A-2 373 227 eine automatische Fütterungsvorrichtung für Pferde bekannt, deren eine Dosierkammer enthaltende Dosiertrommel an einen Getriebemotor angeschlossen ist, der bei Erregung die Dosiertrommel einmal um 360° dreht und die Dosierkammer einmal den Zyklus Füllstellung-Entleerungsstellung-Füllstellung durchlaufen lässt. Auch diese Fütterungsvorrichtung gestattet es, nur lediglich ein Auslaufrohr zu bedienen.

Aufgabe der Erfindung ist es, eine selbsttätige Tierfütterungsvorrichtung zu schaffen, die sich bei einfachem, betriebssicherem Aufbau und kleinem Platzbedarf durch eine grosse Genauigkeit bei der Abmessung der Futterportionen auszeichnet und es gestattet, mehrere Ausgaberohre mit genau abgemessenen Futterportionen zu versorgen.

Zur Lösung dieser Aufgabe ist die eingangs genannte Fütterungsvorrichtung erfindungsgemäss dadurch gekennzeichnet, dass jeder Füll- und Entleerungsöffnung der Dosiertrommel ein eigener, zu einer Futterstelle führender Auslaufkanal zugeordnet ist und der Füll- und Entleerungszyklus der einen Dosierkammer in der entgegengesetzten Drehrichtung der Dosiertrommel abläuft wie der der anderen Dosierkammer und dass die die Dosierkammer abwechselnd im einen und im entgegengesetzten Drehsinn antreibende Antriebsvorrichtung derart ausgebildet ist, dass die Dosiertrommel jeweils lediglich eine unvollständige Umdrehung ausführt.

Diese Vorrichtung gestattet es, entweder einem Tier abwechselnd unterschiedlich grosse Futterportionen zuzuteilen oder zwei oder mehr Tiere aus dem gleichen Vorratsbehälter mit – gegebenenfalls unterschiedlich grossen – Futterportionen zu versorgen.

Der Dosiertrommel wird von der Antriebsvorrichtung eine hin- und hergehende Drehbewegung zwischen der ersten und der zweiten Stellung erteilt. Dazu kann die Antriebsvorrichtung einen elektrischen Getriebemotor mit selbsttätigem Rücklauf in die Ausgangsstellung aufweisen, wie er beispielsweise als Scheibenwischermotor preiswert zur Verfügung steht.

Um den Betriebszustand der Dosiervorrichtung überwachen zu können, ist es vorteilhaft, wenn die Dosiertrommel zumindest teilweise durchsichtig ausgebildet ist. Sollte sie in einem Gehäuse angeordnet sein, so kann das Gehäuse wenigstens ein den Blick auf ein durchsichtiges Teil der Dosiertrommel freigebendes Schaufenster enthalten.

Andere Weiterbildungen der Fütterungsvorrichtung sind Gegenstand von weiteren abhängigen Ansprüchen.

In der Zeichnung ist ein Ausführungsbeispiel des Gegenstandes der Erfindung dargestellt. Es zeigen:

Fig. 1 eine Fütterungsanlage mit zwei Tierfütterungsvorrichtungen gemäss der Erfindung, in perspektivischer, schematischer Darstellung,

Fig. 2 eine Fütterungsvorrichtung der Fütterungsanlage nach Fig. 1, im axialen Schnitt, in einer Seitenansicht und in schematischer Darstellung

Fig. 3 und 4 eine Dosiervorrichtung der Fütterungsvorrichtung nach Fig. 2, in einem Längsschnitt unter Veranschaulichung von zwei verschiedenen ausgezeichneten Stellungen der Dosiertrommel.

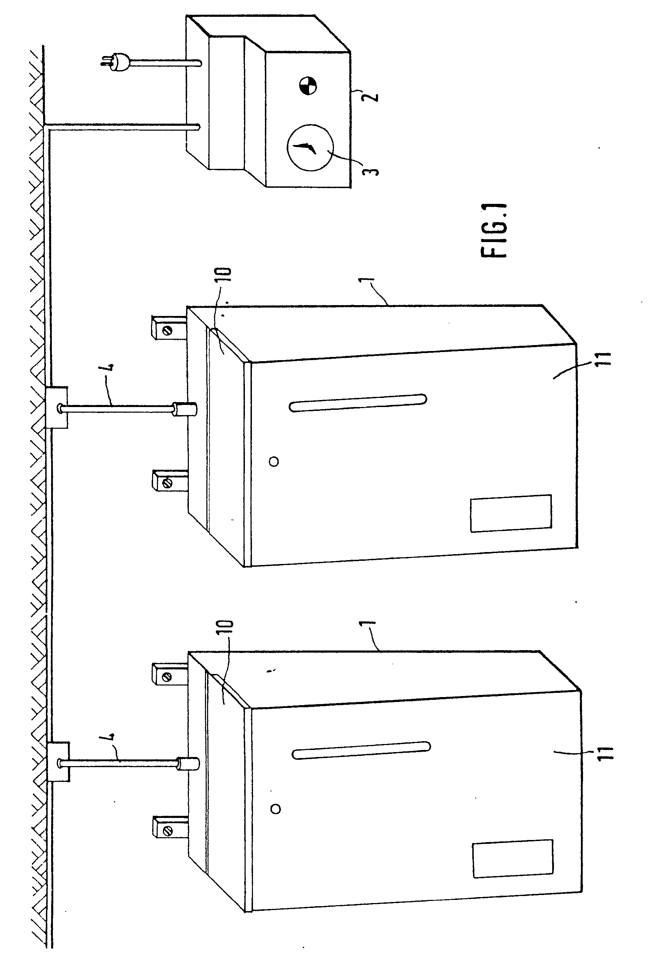

Die in Fig. 1 dargestellte Fütterungsanlage weist zwei Fütterungsvorrichtungen 1 auf, die über ein zentrales Steuergerät 2 angesteuert sind, welche zu vorbestimmten, an einem Zeitschaltwerk 3 einstellbaren Zeitpunkten über Leitungen 4 Steuerimpulse zu den einzelnen Fütterungsvorrichtungen 1 schickt, die daraufhin vorbestimmte Futterportionen abgeben.

Jede der Fütterungsvorrichtungen 1 weist einen kastenartigen Vorratsbehälter 5 für schüttfähiges Futter 6 auf, der unten durch einen Auslauftrichter 7 begrenzt ist, welcher in eine Auslauföffnung 8 mündet. An die Auslauföffnung 8 schliesst sich eine Dosiervorrichtung 9 an, die gemeinsam mit dem durch einen Deckel 10 verschliessbaren Vorratsbehälter 5 in einem eine abnehmbare vordere Abdeckung 11a aufweisenden Gehäusekasten 11 untergebracht ist, der an einer Wand oder dergleichen befestigt werden kann. Die vordere Abdeckung 11a trägt auf der Innenseite ein Schloss 42, das mit einem Anschlagblech 5b zusammenwirkt und ein Verschliessen der Abdeckung 11a ermöglicht. Oben und unten trägt die vordere Abdeckung 11a Halterungsteile 11b, 11c, die die obere Berandung des Vorratsbehälters 5 bzw. einen Anschlagwinkel 5a übergreifen. Die von der Dosiervorrichtung 9 abgeteilten Futterportionen gelangen durch einen Auslaufkanal in einen bei 13 angedeuteten Futtertrog.

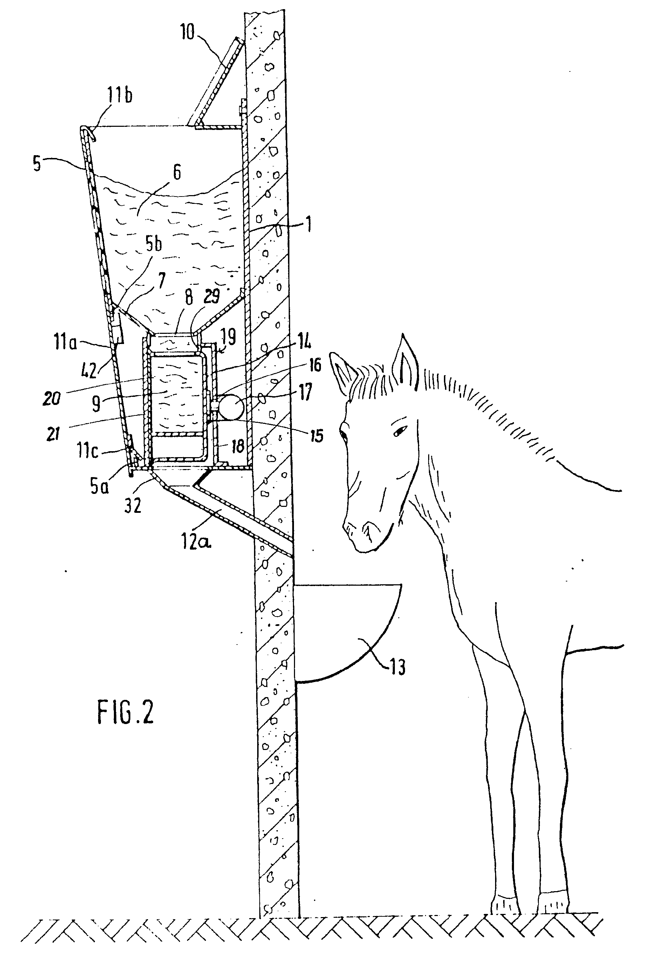

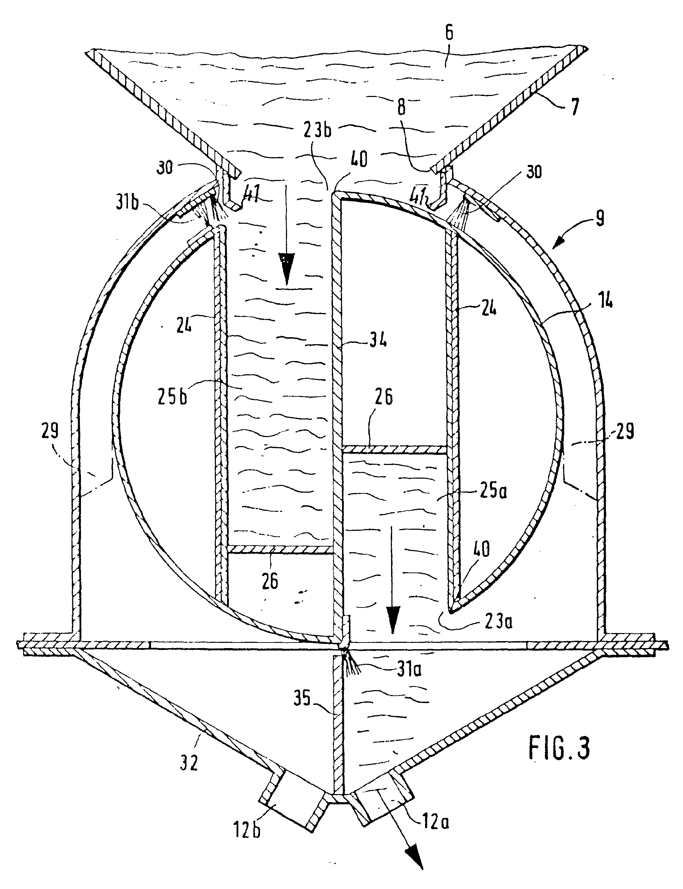

Die Dosiervorrichtung 9 weist in der beispielsweise aus den Fig. 2, 3 ersichtlichen Weise eine zylindrische Dosiertrommel 14 auf, die an ihrem Boden an eine Nabe 15 angeflanscht ist, welche ihrerseits drehfest auf der Welle 16 eines Getriebemotors 17 sitzt, der an der Rückwand 18 eines die Dosiertrommel 14 umschliessenden Gehäuses 19 befestigt ist. Die Dosiertrommel 14 ist an ihrer anderen Stirnseite durch eine durchsichtige Kunststoffscheibe 20 verschlossen, die nach Abnahme einer ebenfalls durchsichtigen und ein Schaufenster bildenden feststehenden Gehäusewand 21, beispielsweise zur Portionsverstellung oder zur Reinigung des Inneren der Dosiertrommel 14, abnehmbar ist.

Die Dosiertrommel 14 ist im Bereiche ihrer Umfangsfläche mit zwei Füll- und Entleerungsöffnungen 23a, b ausgebildet, die rechteckige Querschnittsgestalt aufweisen und in zwei durch zwei parallele Seitenwände 24 begrenzte Dosierkammern 25a, b im Inneren der Dosiertrommel 14 münden. Jede Dosierkammer 25a, b ist unten durch ein Bodenteil 26 abgeschlossen, das der Höhe nach wahlweise verstellbar ist. Zur Verstellung des Bodenteils 26 dienen in den Seitenwänden 24 vorgesehene Lochreihen, in die das Bodenteil 26 haltende Halterungsteile einschiebbar sind.

Die Füll- und Entleerungsöffnungen 23b der Dosiertrommel 14 ist in der in Fig. 3 dargestellten ersten Stellung der Dosiertrommel 14 abgedichtet an die Auslauföffnung 8 des Vorratsbehälters 5 angeschlossen. Zu diesem Zwecke ist an dem Gehäuse 19 eine auf der Umfangsfläche der Dosiertrommel 14 gleitende elastische Dichtlippe 29 vorgesehen, während anderseits an dem Gehäuse 19 befestigte Bürstenleisten 30 gemeinsam mit an der Dosiertrommel 14 angeordneten Bürstenleisten 31a, b die Abdichtungen des zwischen der Umfangsfläche der Dosiertrommel 14 und der benachbarten Wandung des Gehäuses 19 vorhandenen Spaltes gewährleisten.

Die beiden Dosierkammern 25a, 25b sind durch eine Trennwand 34 voneinander getrennt und können durch entsprechende Einstellung der verstellbaren Bodenteile 26 ein unterschiedliches Füllvolumen aufweisen. Ihre Füll- und Entleerungsöffnungen 23a, 23b sind am Umfang der Dosiertrommel 24 um 180° gegeneinander versetzt angeordnet, während der Fülltrichter 32 eine Zwischenwand 35 enthält, die zwei getrennten Auslaufkanälen 12a, 12b zugeordnete Schütträume voneinander trennt. Die zwei Bürstenleisten 31a, 31b sind jeweils in der Nähe einer Berandung der Füll- und Entleerungsöffnungen 23a, 23b angeordnet.

In der in Fig. 3 dargestellten Ausgangsstellung wird die linke Dosierkammer 25b mit Futter befüllt, das in Richtung des in Fig. 3 eingetragenen Pfeiles einströmt, während die rechte Dosierkammer 25a über den Auslaufkanal 12a entleert wird, wobei die den beiden Auslaufkanälen 12a, 12b zugeordneten Schütträume durch die Bürstenleiste 31a gegeneinander abgedichtet sind.

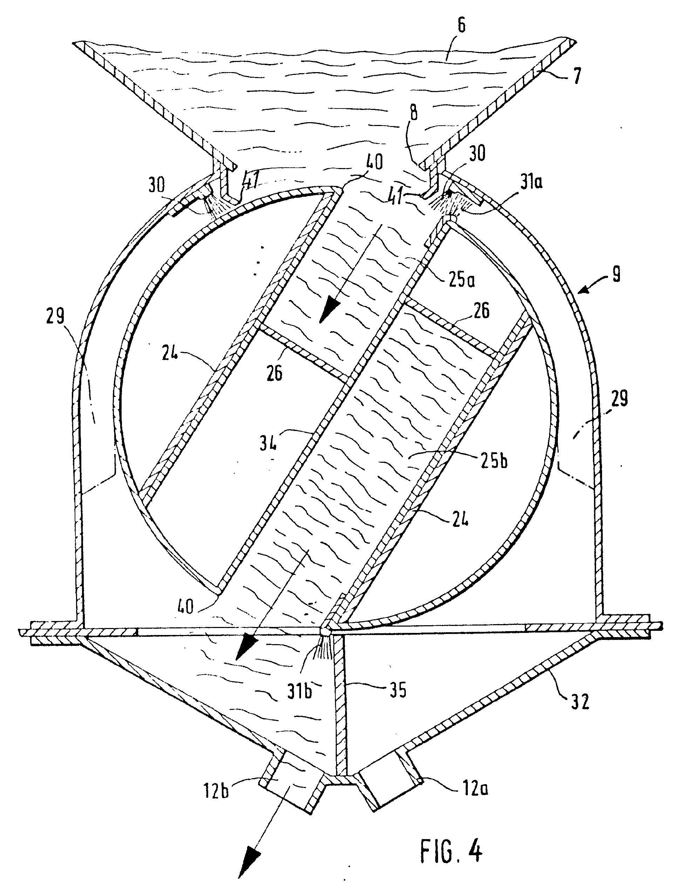

Nach der Entleerung der Dosierkammer 25a kann die Dosiertrommel 14 in die in Fig. 4 dargestellte zweite Stellung überführt werden, in der nunmehr die andere Dosierkammer 25b in den dem Auslasskanal 12b zugeordneten Schüttraum

entleert wird, während die Dosierkammer 25a aus dem Vorratsbehälter 5 befüllt wird. Dabei bewirkt die Bürstenleiste 31b die Abdichtung gegen den dem Auslaufkanal 12a zugeordneten Schüttraum.

Zu diesem Zwecke gibt zu einem vorbestimmten Zeitpunkt die Steuereinheit 2 einen elektrischen Impuls auf den Getriebemotor 17, der damit die Dosiertrommel 14 in die in Fig. 4 dargestellte zweite Stellung verdreht. Sowie das in der Dosierkammer 25b enthaltene Futter ausgeströmt ist, dreht der Getriebemotor 17 die Dosierkammer 14 im entgegengesetzten Drehsinn wieder in die Stellung nach Fig. 3 zurück, in der sie von neuem selbsttätig mit Futter aus dem Vorratsbehälter 5 befüllt wird, womit sie in Bereitschaftsstellung für den nächsten Fütterungsbefehl steht.

Jeder Fütterungsvorrichtung 1 kann im übrigen ein eigenes, gegebenenfalls auch zusätzliches Steuergerät zugeordnet sein, das es gestattet, entsprechend einem Eigenprogramm oder von Hand diese Fütterungsbefehle an den Getriebemotor 17 zu geben. Um zu vermeiden, dass sich pelletartige oder kornartige Futterteilchen zwischen der Berandung einer Füll- und Entleerungsöffnung 23 bzw. 23a oder 23b und der zugeordneten Berandung der Auslauföffnung 8 bei der Verdrehung der Dosiertromme 14 verklemmen, ist jeweils eine Randkante 40 der Füll- und Entleerungsöffnungen 23a und 23b als scharfe Messer- oder Trennkante ausgebildet, die mit einer an dem Fülltrichter 7 oder dem Gehäuse 19 angeordneten Gegenschneide 41 in dem Sinne zusammenwirkt, dass sich etwa verklemmende Futtermittelteilchen durchschnitten werden.

## Patentansprüche

1. Tierfütterungsvorrichtung zur Ausgabe von schüttbarem Futter, insbesondere für Pferde, mit einem das Futter aufnehmenden Vorratsbehälter (5), an dessen Auslauföffnung (8) sich eine vorbestimmte Futterportionen abteilende Dosiervorrichtung anschliesst, die eine unterhalb der Auslauföffnung (8) des Vorratsbehälters (5) angeordnete, um eine horizontale Achse drehbar gelagerte, geschlossene Dosiertrommel (14) aufweist, welche mit wenigstens zwei am Umfang der Dosiertrommel (14) gegeneinander versetzt angeordneten, jeweils zu einer Dosierkammer (25a, b) führenden Füll- und Entleerungsöffnungen (23a, b) versehen ist, von denen in einer ersten Trommelstellung wenigstens eine (23b) und in einer zweiten Trommelstellung wenigstens eine andere (23a) jeweils auf die Auslauföffnung (8) ausgerichtet und abgedichtet an diese angeschlossen ist, während die jeweils nicht an die Auslauföffnung (8) angeschlossene Füll- und Entleerungsöffnung (23a, b) nach unten zu gerichtet mit einem zu Futterstellen führenden Auslaufteil verbunden ist und wobei die Dosiertrommel (14) mit einer ihr zur Durchführung der Füll- und Entleerungszyklen eine Drehbewegung erteilenden, wahlweise ansteuerbaren Antriebsvorrichtung (17) gekuppelt ist, dadurch gekennzeichnet, dass jeder Füll- und Entleerungsöffnung (23a, b) der Dosiertrommel (14) ein eigener, zu einer Futterstelle führender Auslaufkanal (12a, b) zugeordnet ist und der Füll- und Entleerungszyklus der einen Dosierkammer (25a) in der entgegengesetzten Drehrichtung der Dosiertrommel (14) abläuft wie der der anderen Dosierkammer (25b) und dass die die Dosierkammer (14) abwechselnd im einen und im entgegengesetzten Drehsinn antreibende Antriebsvorrichtung (17) derart ausgebildet ist, dass die Dosiertrommel (14) jeweils lediglich eine unvollständige Umdrehung ausführt.

2. Vorrichtung nach Anspruch 1, dadurch gekennzeichnet, dass jede der Dosierkammern (25a, b) eine eigene Einrichtung zur Veränderung ihres Volumens aufweist.

3. Vorrichtung nach Anspruch 2, dadurch gekennzeichnet, dass die Einrichtung zur Veränderung des Volumens aus einem der Höhe nach verstellbaren Boden (26) der Dosierkammer (25a, b) besteht.

4. Vorrichtung nach einem der vorhergehenden Ansprüche, dadurch gekennzeichnet, dass die Dosiertrommel (14) in einem sie allseitig umschliessenden Gehäuse (19) angeordnet ist, das an den Vorratsbehälter (5) angeschlossen ist und von dem unten die Auslaufkanäle (12a, b) abgehen.

5. Vorrichtung nach Anspruch 4, dadurch gekennzeichnet, dass das Gehäuse (19) unten einen Auslauftrichter (32) aufweist, an dem die Auslaufkanäle (12a, b) angeschlossen sind, deren Mündungen durch eine Zwischenwand (35) in dem Auslauftrichter (32) voneinander getrennt sind.

6. Vorrichtung nach einem der vorhergehenden Ansprüche, dadurch gekennzeichnet, dass die Dosiertrommel (14) gegen die Auslauföffnung (8) durch Dichtbürstenleisten (30, 31a, b) abgedichtet ist.

7. Vorrichtung nach einem der vorhergehenden Ansprüche, dadurch gekennzeichnet, dass die Dosiertrommel (14) im Bereiche ihrer Füll- und Entleerungsöffnungen (23a, b) jeweils mit einer mit einer Gegenkante (41) im Bereiche der Auslauföffnung (8) zusammenwirkenden scharfen Trennkante (40) versehen ist.

8. Vorrichtung nach einem der vorhergehenden Ansprüche, dadurch gekennzeichnet, dass die Antriebsvorrichtung einen elektrischen Getriebemotor (17) mit selbsttätigem Rücklauf in die Ausgangsstellung aufweist.

9. Vorrichtung nach einem der vorhergehenden Ansprüche, dadurch gekennzeichnet, dass die Dosiertrommel (14) zumindest teilweise durchsichtig ausgebildet ist.

10. Vorrichtung nach den Ansprüchen 4 und 9, dadurch gekennzeichnet, dass das Gehäuse (19) wenigstens ein den Blick auf ein durchsichtiges Teil der Dosiertrommel (14) freigebendes Schaufenster enthält.

11. Vorrichtung nach einem der vorhergehenden Ansprüche, dadurch gekennzeichnet, dass die Dosiertrommel (14) zusammen mit dem Vorratsbehälter (5) in einem Gehäusekasten (11) angeordnet ist, der auf wenigstens einer Seite eine lösbare Abdeckung (11a) trägt.

12. Vorrichtung nach Anspruch 11, dadurch gekennzeichnet, dass die Abdeckung (11a) an dem Gehäusekasten (11) durch Halterungsteile (11b, 11c) gehaltert und mittels eines Schlosses (42) verriegelbar ist.

**Claims**

1. An animal-feeding device for dispensing loose feed, especially for horses, comprising a supply hopper (5) for the feed which has connected to its discharge opening (8) a dosing device for metering out a predetermined amount of feed comprising a closed dosing drum (14) which is arranged underneath the discharge opening (8) of the supply hopper (5), mounted to rotate about a horizontal axis and provided with at least two discharge openings (23a, b) arranged in offset arrangement on the circumference of the dosing drum (14) and communicating with one dosing chamber (25a, b) each, the said discharge openings (23a, b) being arranged in a manner such that in a first drum position at least one of them (23b) and in a second drum position at least another one of them (23a) is aligned with and connected in sealing relationship to the discharge opening (8) while the other filling and discharge opening (23a, b) being not so connected is downwardly directed and connected to an outlet element leading to the feeding positions, the dosing drum (14) being coupled to selectively controllable drive means (17) imparting to it the rotary movement necessary for performing the filling and discharge cycles, characterized in that each of the filling and discharge openings (23a, b) of the dosing drum (14) has associated to it a discharge channel (12a, b) leading to a feeding position and that the filling and discharging cycle of the one dosing chamber (25a) is oppositely directed to that of the other dosing chamber (25b) relative to the sense of rotation of the dosing drum (14), and that the drive means (17) driving the dosing drum (14) alternately in one and then in the opposite directions is adapted to cause the dosing drum (14) to make only one incomplete revolution at a time.

2. A device in accordance with claim 1, characterized in that each of the dosing chambers (25a, b) comprises separate means for varying its volume.

3. A device in accordance with claim 2, characterized in that the means for varying the volume takes the form of an adjustable bottom (26) of the dosing chamber (25a, b) which is adjustable in height.

4. A device in accordance with any of the preceding claims, characterized in that the dosing drum (14) is mounted in a casing (19) enclosing it on all sides, which casing is connected to the supply hopper (5) and has the discharge channels (12a, b) mounted on its bottom to project downwardly therefrom.

5. A device in accordance with claim 4, characterized in that the casing (19) is provided at its bottom with a discharge funnel (32) communicating with the discharge channels (12a, b) the openings of which are separated from each other by a partition (35) in the said discharge funnel (32).

6. A device in accordance with any of the preceding claims, characterized in that the dosing drum (14) is sealed off against the discharge opening (8) by means of sealing brush strips (30, 31a, b).

7. A device in accordance with any of the preceding claims, characterized in that the dosing drum (14) has each of its filling and discharge openings (23a, b) equipped with a sharp separating edge (40) coacting with a mating edge (41) provided in the area of the discharge opening (8.

8. A device in accordance with any of the preceding claims, characterized in that the drive means comprises an electric gear motor (17) with automatic return to the initial position.

9. A device in accordance with any of the preceding claims, characterized in that the dosing drum (14) is at least partly made of a transparent material.

10. A device in accordance with claims 4 and 9, characterized in that the casing (19) is equipped with at least one inspection window giving a view of a transparent part of the dosing drum (14).

11. A device in accordance with any of the preceding claims, characterized in that the dosing drum (14) and the supply hopper (5) are commonly mounted in a boxlike casing (11) provided on at least one of its sides with a removable cover (11a).

12. A device in accordance with claim 11, characterized in that the cover (11a) is held at the box-like casing (11) by holding members (11b, 11c) and can be locked in place by means of a lock (42).

**Revendications**

1. Dispositif d'alimentation pour animaux, destiné à assurer la distribution de nourriture pouvant être déversée en vrac, en particulier pour les chevaux, comportant un récipient de stockage (5) contenant la nourriture, récipient à l'orifice de sortie (8) duquel est raccordé un dispositif de dosage qui sépare une portion de nourriture préétablie, et qui présente un tambour doseur (14) fermé, monté de façon à pouvoir tourner autour d'un axe horizontal et disposé au-dessous de l'orifice de sortie (8) du récipient de stockage (5), ce tambour doseur (14) étant muni d'au moins deux orifices de remplissage et de vidage (23a, b) prévus sur sa périphérie et décalés l'un par rapport à l'autre ou les uns par rapport aux autres, et dont chacun mène à une chambre de dosage (25a, b), orifices dont l'un (23b) au moins, dans une première position du tambour, et un autre (23a) au moins, dans une seconde position du tambour, sont chaque fois alignés sur l'orifice de sortie (8) et raccordés à celui-ci de façon étanche, tandis que l'orifice de remplissage et de vidage (23a, b) qui, dans chaque cas, n'est pas raccordé à l'orifice de sortie (8), est alors dirigé vers le bas et relié à un élément d'écoulement qui mène aux points d'alimentation ou mangeoires, le tambour doseur (14) étant couplé avec un dispositif d'entraînement (17) pouvant être commandé à volonté et qui imprime audit tambour doseur (14) un mouvement de rotation en vue de l'exécution des cycles de remplissage et de vidage, caractérisé en ce qu'à chaque orifice de remplissage et de vidage (23a, b) du tambour doseur (14) est associé un conduit d'écoulement (12a, b) qui lui est propre et qui mène à une mangeoire, et que le cycle de remplissage et de vidage de l'une (25a) des chambres de dosage se déroule dans le sens de rotation du tambour doseur (14) qui est opposé à celui pour l'autre chambre de dosage (25b), et en ce que le dispositif d'entraînement (17), qui entraîne le tambour doseur (14) alternativement dans un sens de rotation et dans le sens opposé, est réalisé de telle manière que le tambour doseur (14) n'exécute chaque fois qu'une rotation incomplète.

2. Dispositif selon la figure 1, caractérisé en ce que chacune des chambres de dosage (25a, b) présente son propre dispositif permettant de modifier son volume.

3. Dispositif selon la revendication 2, caractérisé en ce que le dispositif permettant de modifier le volume est constitué par un fond (26) réglable en hauteur de la chambre de dosage (25a, b).

4. Dispositif selon l'une quelconque des revendications précédentes, caractérisé en ce que le tambour doseur (14) est disposé dans un carter (19) qui l'entoure de tous côtés, et qui est raccordé au récipient de stockage (5), carter (19) duquel partent, en bas, les conduits d'écoulement (12a, b).

5. Dispositif selon la revendication 4, caractérisé en ce que le carter (19) présente, en bas, une trémie d'écoulement (32) à laquelle sont raccordés les conduits d'écoulement (12a, b) dont les ouvertures sont séparées l'une de l'autre, dans la trémie d'écoulement (32), par une cloison (35).

6. Dispositif selon l'une quelconque des revendications précédentes, caractérisé en ce que le tambour doseur (14) est rendu étanche, par rapport à l'orifice de sortie (8), par des barrettes d'étanchéité à balai (30, 31a, b).

7. Dispositif selon l'une quelconque des revendications précédentes, caractérisé en ce que, dans la zone de ses orifices de remplissage et de vidage (23a, b), le tambour doseur (14) est chaque fois muni d'une arête de séparation (40) qui coopère dans la zone de l'orifice de sortie (8), avec une contre-arête (41).

8. Dispositif selon l'une quelconque des revendications précédentes, caractérisé en ce que le dispositif d'entraînement présente un motoréducteur électrique (17), avec retour automatique dans la position de départ.

9. Dispositif selon l'une quelconque des revendications précédentes, caractérisé en ce que le tambour doseur (14) est réalisé de manière à être au moins partiellement transparent.

10. Dispositif selon l'une quelconque des revendications 4 et 9, caractérisé en ce que le carter (19) contient au moins une fenêtre donnant vue à une partie transparente du tambour doseur (14).

11. Dispositif selon l'une quelconque des revendications précédentes, caractérisé en ce que le tambour doseur (14) est disposé, conjointement au récipient de stockage (5), dans un caisson formant carter (11), lequel porte, sur au moins une face, un panneau amovible (11a).

12. Dispositif selon la revendication 11, caractérisé en ce que le panneau (11a) est maintenu sur le caisson formant carter (11) par des éléments de fixation (11b, 11c) et peut être verrouillé au moyen d'une serrure (42).

FIG.1

0 010 700

FIG.2

FIG.3

FIG. 4